# EUROPEAN PATENT APPLICATION

(11) **EP 3 936 472 A2**
(43) Date of publication of application: **12.01.2022**
(21) Application number: 21184174.7
(22) Date of filing: 07.07.2021
(51) Int. Cl.: C01B 7/09

(54) **PROCESS FOR RECOVERY AND SEPARATION OF BROMINE AND WATER FROM OXIDATION OF HYDROGEN BROMIDE**

(30) Priority: 10.07.2020 US 202063050624 P
(71) Applicant: Reaction 35, LLC, Santa Barbara, CA 93111 (US)
(72) Inventor: WAYCUILIS, John, Santa Barbara, 93111 (US)
(74) Representative: Forresters IP LLP

(57) **Abstract**

A hydrogen bromide (HBr) oxidation/quench system includes a heat exchanger reactor and an adiabatic catalytic reactor in fluid communication with the heat exchanger reactor. The system also includes a quench vessel, the quench vessel in fluid communication with the adiabatic catalytic reactor. The quench vessel has a flange. In addition, the system includes a joined three phase separator and absorber column, wherein both the three phase separator and the absorber column are in fluid communication with the quench vessel and an aqueous stripping column in fluid communication the heat exchanger reactor and the absorber column.

## Description

### CROSS REFERENCE TO RELATED APPLICATIONS:

This application is a nonprovisional application which claims priority from U.S. provisional application number 63/050,624, filed July 10, 2020, which is incorporated by reference herein in its entirety.

### BACKGROUND

Bromine is used in organic chemical synthesis processes, for example, in the production of fire-retardants, polymers such as polyethylene terephthalate (PET), and pharmaceuticals. The hydrogen bromide byproduct of these reactions is usually neutralized with caustic forming a bromide salt solution, which is a waste product. Fresh elemental bromine is supplied to the process.

Cost and waste reductions may result if the hydrogen bromide (HBr) were oxidized with air or oxygen back to elemental bromine (Br₂) for reuse within these processes, according to the thermodynamically favorable reaction 4HBr + O₂ → 2Br₂ + 2H₂O. However, oxidation of hydrogen bromide to bromine is traditionally not practiced commercially, in part due to the practical difficulties and limited choices of suitable materials for cooling and condensing the very hot gaseous oxidation reactor effluent that contains bromine, water, and trace amounts of hydrogen bromide.

Although nickel alloys are suitable for handling the hot (∼350-500 °C) gaseous reaction mixture as long as the temperature is above the dew point, nickel alloys are rapidly corroded by the presence of an aqueous phase containing Br₂ and HBr. Other non-metallic materials such as glass, ceramic, and silicon carbide, while resistant to both hot gaseous and sub-dew point mixtures, may be prone to mechanical or thermal shock. These non-metallic materials may require polymeric pressure seals (such as for silicon carbide heat exchanger tubes) thereby limiting the maximum operating temperature range of these materials to about 260 °C, the maximum operating temperature for polytetrafluoroethylene (PTFE) and other fluoropolymers. At or below 260 °C, PTFE may be permeated by bromine or hydrogen bromide that may require venting/evacuating the space between the liner and vessel wall and applying a corrosion barrier coating of the internal metal wall. In addition, glass-lined or epoxy-lined carbon steel is suitable for exposure to aqueous bromine and acids, but is limited to use at temperatures below about 260 °C. Thus, the transition between the hot superheated vapor and the cooled, condensing mixture in an HBr oxidation and bromine recovery process may be problematic for existing methods. High cost refractory metals such as tantalum, which are resistant to aqueous bromine service at temperatures of about 150 °C or less, are subject to corrosion or embrittlement at temperatures above 300 °C in the presence of oxygen, nitrogen, (present when air is utilized as the lowest-cost oxidant for the HBr oxidation reaction) or bromine.

### SUMMARY

In an embodiment of the present disclosure, a HBr oxidation/quench system is disclosed. The HBr oxidation/quench system includes a heat exchanger reactor, an adiabatic catalytic reactor in fluid communication with the heat exchanger reactor, and a quench vessel, the quench vessel in fluid communication with the adiabatic catalytic rector. The quench vessel has a flange. The HBr oxidation/quench system also includes a joined three phase separator and absorber column, wherein both the three phase separator and the absorber column are in fluid communication with the quench vessel. In addition, the HBr oxidation/quench system further includes an aqueous stripping column in fluid communication the heat exchanger reactor and the absorber column.

In another embodiment, a method is disclosed. The method includes reacting air and HBr in a heat exchanger reactor to form reactor effluent comprising HBr, water, bromine and air. In addition, the method includes reacting the reactor effluent in an adiabatic reactor to form adiabatic reactor effluent comprising HBr, water, bromine and air. Also, the method includes quenching the adiabatic reactor effluent to form a quench bottoms outlet stream and a quench vessel overhead stream. The method further includes separating the quench bottoms outlet into a bromine product stream and a water recycle stream and using a first portion of the water recycle stream as a quench water feed stream. In addition, the method includes stripping a second portion of the water recycle stream in an aqueous stripper to form a water out stream.

A hot vapor transition assembly is disclosed. The assembly includes a central nickel alloy tube, and an outer annular tube, the outer annular tube annularly enclosing the central nickel alloy tube and forming an inner annular space between the central nickel alloy tube and the outer annular tube. The assembly also includes a lining, the lining annularly enclosing the outer annular tube and forming an outer annular space between the outer annular tube and the lining.

A method is disclosed. The method includes providing a quench vessel, the quench vessel comprising a flange. The method also includes providing a hot vapor transition assembly, the hot vapor transition assembly positioned within the flange. The hot vapor transition assembly includes a central nickel alloy tube and an outer annular tube, the outer annular tube annularly enclosing the central nickel alloy tube and forming an inner annular space between the central nickel alloy tube and the outer annular tube, the outer annular tube having a protruding portion that extends into the quench vessel. The hot vapor transition assembly also includes a lining, the lining annularly enclosing the outer annular tube and forming an outer annular space between the outer annular tube and the lining. The method also includes introducing hot vapor into the central nickel tube, the hot vapor temperature exceeding the dew point temperature of the hot vapor and purging the outer annual space with buffer air. In addition, the method includes cooling the protruding portion with quench water.

### BRIEF DESCRIPTION OF DRAWINGS

The present disclosure is best understood from the detailed description when read with the accompanying figures. In accordance with the standard practice in the industry, various features are not drawn to scale. Schematic drawings are structural or procedural diagrams.
FIG. 1 is a schematic view of an embodiment of a HBR oxidation and quench system consistent with at least one embodiment of the present disclosure.
FIG. 2 is a schematic view of a hot vapor feed transition assembly according to one or more aspects of the present disclosure.

### DETAILED DESCRIPTION

### Introduction and Definitions

The following disclosure provides many different embodiments and examples. Specific examples of equipment and arrangements are described below to simplify the present disclosure. These are merely examples and are not intended to be limiting. In addition, the present disclosure may repeat reference numerals and/or letters in the various examples. This repetition is for simplicity and clarity and does not in itself dictate a relationship between the various embodiments and/or configurations discussed.

Various terms are used herein. To the extent a term used in a claim is not defined below, it should be given the broadest definition skilled persons in the pertinent art have given that term as reflected in printed publications and issued patents at the time of filing. Further, unless otherwise specified, all compounds described herein may be substituted or unsubstituted and the listing of compounds includes derivatives thereof.

Further, various ranges and/or numerical limitations may be expressly stated below. It should be recognized that any ranges include iterative ranges of like magnitude falling within the expressly stated ranges or limitations.

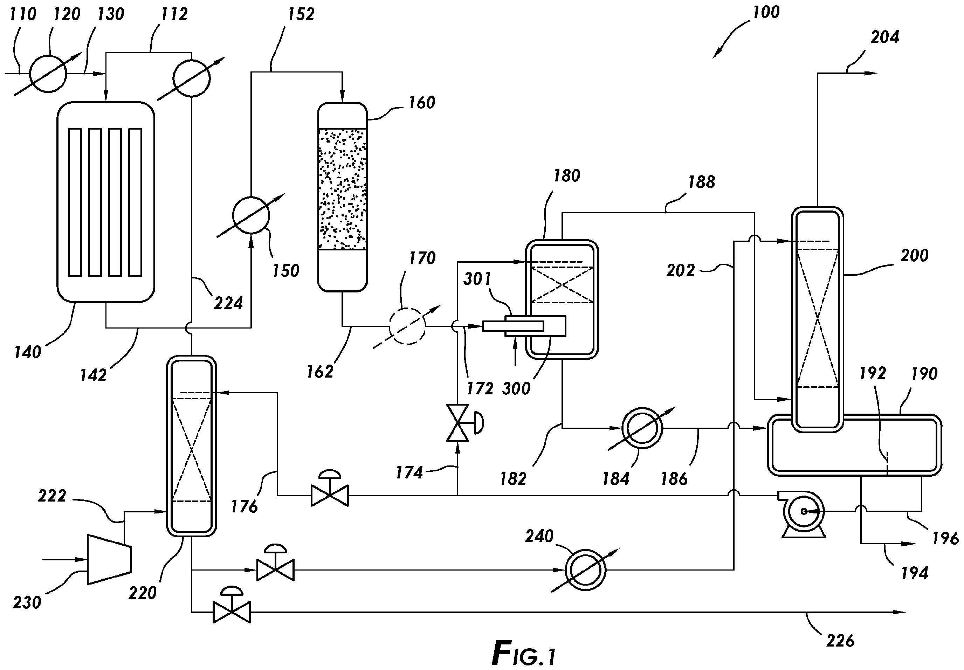

HBr oxidation/quench system 100 is depicted in FIG. 1. HBr feed 110 having HBr is preheated in heat exchanger HEX-1 120, for example, from about 225 °C to 325 °C, to form preheated HBr feed 130. In certain embodiments, HBr in preheated HBr feed 130 is combined with preheated air mixture feed 112 and fed to heat exchanger reactor 140. Heat exchanger reactor 140 may be thermal, catalytic, or both. Heat exchange reactor 140 may have a conversion of HBr of about 80% to 90% to bromine and water vapor. Reactor effluent 142 comprising HBr, water, bromine, and nitrogen and unreacted oxygen, is cooled to between about 225° C to 325 °C in reactor effluent cooler HEX-3 150 to form adiabatic catalytic reactor feed stream 152. Reactor effluent cooler HEX-3 150 may operate above the dew point of water and bromine. Operating reactor effluent cooler HEX-3 150 above the dew point of water and bromine allows the use of metallic Nickel or Nickel alloy material on the process-side of HEX-3 150 with the reactor effluent mixture. Adiabatic catalytic reactor feed stream 152 is fed to adiabatic catalytic reactor 160, in which the about 10% to 20% of HBr conversion to bromine and water occurs forming adiabatic reactor effluent 162, which may include HBr, water, bromine, nitrogen, and unreacted oxygen. The combination of heat exchange reactor 140 and adiabatic catalytic reactor 160 may convert above 99%, above 99.5% or above 99.9% HBr to bromine and water. Unconverted HBr may irreversibly dissolve and ionize in water in the quench vessel 180 forming aqueous Br- ions. Such Br- ions may combine with Br₂, forming watersoluble complexes such as Br₃-. These Br₃- ions are not easily recovered, which may result in undesirable losses of both HBr and Br₂ to the aqueous liquid phase, which may be discharged in water out stream 226. In addition, Br- ions formed may restrict or prevent the formation of a separate liquid Br₂ phase in 3-phase separator 190, described hereinbelow.

In some embodiments, waste heat may be recovered from the adiabatic reactor effluent 162 in waste heat recovery exchanger HEX-6 170 in forming quench vessel feed 172. Waste heat recovery exchanger HEX-6 170 may be maintained above the dew point of water and bromine condensation such that metallic Nickel or Nickel alloy material may be used in contact with the process-side adiabatic reactor effluent 162.

In certain embodiment, HBr oxidation/quench system 100 may include quench vessel 180 to which quench vessel feed 172 is fed. In certain embodiments, quench vessel 180 may be glass-lined, epoxy-lined or fluoropolymer-lined. In some embodiments, quench vessel 180 may include hot vapor feed transition assembly 300, described below. Quenched bromine and water in quench vessel bottoms stream 182 may be cooled in quench recycle cooler HEX-4 184, forming cooled 3-phase separator feed 186. In certain embodiments, quench recycle cooler HEX-4 184 has tubes made of silicon carbide, alumina, other ceramic material, or a refractory metal or refractory metal cladding such as Tantalum. Quench vessel overhead stream 188, which is fed to absorber column 200, may include hydrogen bromide, bromine, water, nitrogen and unreacted oxygen. In the embodiment shown in FIG. 1, 3-phase separator 190 and absorber column 200 are joined. In other embodiments, 3-phase separator 190 and absorber column 200 are separate. In yet other embodiments, absorber column 200 may be omitted. By joining absorber column 200 to 3-phase separator 190, bromine may be more efficiently recovered than were absorber column 200 omitted.

In 3-phase separator 190, a first aqueous liquid phase (containing water, some bromine and ionized HBr) a second liquid bromine phase and vapor phase are separated. The aqueous liquid phase and liquid bromine phase are separated by weir 192 forming bromine product stream 194 and water recycle stream 196. Without being bound by theory, when Br- concentration in the aqueous phase is less than about 5 mol% (corresponding to an HBr conversion of about 95% or higher), a second distinct liquid phase may be formed that is primarily elemental bromine. This second distinct liquid phase, being significantly denser than the first aqueous liquid phase allows the bromine product to efficiently separated from the aqueous phase using simple gravity settling and decanting. When the HBr conversion is greater than 99.9% the bromine phase may contain only about 0.3 wt% water, and furthermore very little unconverted HBr will be lost to the aqueous phase.

Water recycle stream 196 may include dissolved bromine. Bromine may be absorbed in absorber column 200 by absorber column water feed 202. Absorber column overhead 204 may include partially oxygen-depleted air and bromine vapor. Absorber column overhead 204 may be sent to a final scrubbing system to remove any residual hydrogen bromide and bromine.

A portion of water recycle stream 196 may be used for quench water feed 174, while the remainder stream 176 of water recycle stream 196 is fed to aqueous stripping column 220. In certain embodiments, aqueous stripping column 220 is glass-lined, epoxy-lined or fluoropolymer-lined. Aqueous stripping column 220 may include compressed air inlet stream 222 from air compressor 230. Aqueous stripping column 220 uses a compressed air stream to strip bromine from water recycle stream 176 and return the bromine to heat exchanger reactor 140 through aqueous stripping column overhead stream 224 along with compressed air. Aqueous stripping column overhead stream 224, which may include air and bromine, may be heated by heat exchanger HEX-2. Heat exchanger HEX-2 may heat aqueous stripping column overhead stream 224 to a temperature in the range of about 225 °C to 325 °C. A portion of water produced in heat exchanger reactor 140 and adiabatic catalytic reactor 160 may be produced as water out stream 226. A second portion of water produced in heat exchanger reactor 140 and adiabatic catalytic reactor 160 may be cooled in refrigerated liquid cooler HEX-5 240 and fed to absorber column 200 through absorber column water feed 202. Refrigerated liquid cooler HEX-5 may use corrosion-resistant tubes composed of silicon carbide, alumina, other ceramic material, or a refractory metal or refractory metal cladding such as Tantalum.

The aqueous phase in the top stages of the absorber column 200 may contain less than about 3.0 or less than 2.0, or less than 1wt% bromine. The downward flowing chilled water absorbs bromine vapor in the top stages of absorber column 200 and also condenses liquid bromine from the rising residual oxidant vapor further down in the lower stages of absorber column 200.

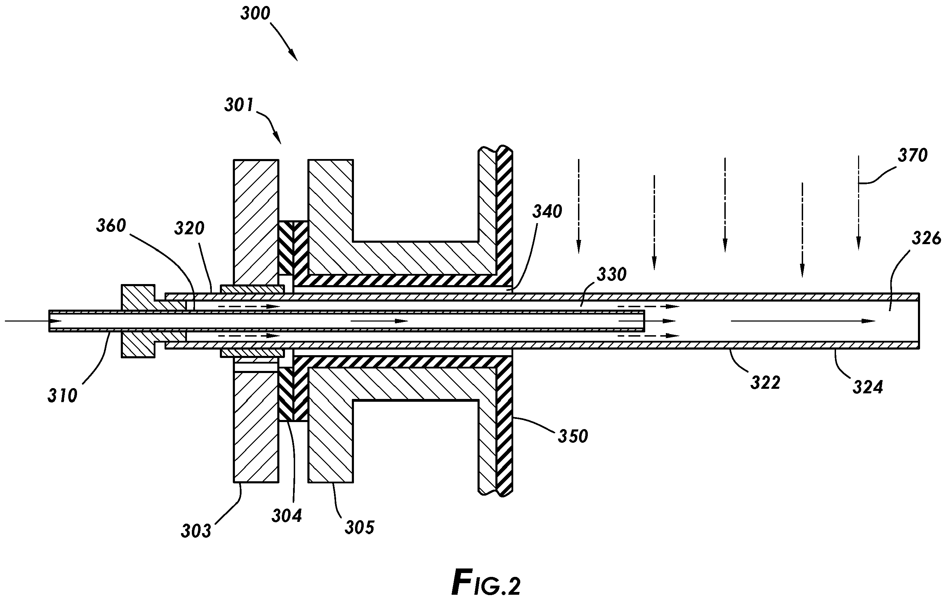

FIG. 2 depicts hot vapor feed transition assembly 300. Hot vapor feed transition assembly 300 includes central nickel alloy tube 310 adapted to transport the hot vapor, such as, for example, quench vessel feed 172. The temperature of central nickel alloy tube 310 may exceed the dew point of the mixture in the hot vapor to avoid condensation and corrosion attack of the nickel alloy of central nickel alloy tube 310. Central nickel alloy tube 310 may be annularly enclosed by outer annular tube 320 forming an inner annular space 330 between central nickel alloy tube 310 and outer annular tube 320. In certain embodiments, outer annular tube 320 may be composed of Titanium, Tantalum, Niobium, Molybdenum, Tungsten or other refractory metals and alloys. Outer annular space 340 is defined by the clearance between outer annular tube 320 and lining 350. In certain embodiments, lining 350 may be formed from glass, epoxy or fluoropolymer. In particular embodiments, lining 350 is a lining of quench vessel nozzle 301, as depicted in FIG. 1.

In the embodiment depicted in FIG. 2, quench vessel nozzle 301 includes outer flange 303 and inner flange 305. In certain embodiments, inner flange 305 may be lined with a fluoropolymer, such as PTFE, glass or epoxy. Gasket 304 positioned between outer flange 303 and inner flange 305 may be a fluoropolymer, such as PTFE, gasket.

Inner annular space 330 and outer annular space 340 may be purged with buffer air to restrict corrosive gases from entering annular spaces 330, 340. Annular spaces 330, 340 may also form a thermal break, thermally isolating central nickel alloy tube 310, thus protecting lining 350 from melting or damage due to excessive temperature. The flow of buffer air is controlled at a very small rate relative to the high rate of flow of hot gases within the central nickel alloy tube 310 so that central nickel alloy tube wall 360 operates at a temperature well above the dewpoint temperature of the hot reaction mixture, thus retarding corrosion attack of the nickel alloy.

Protruding portion 322 of outer annular tube 320 that protrudes into quench vessel 180 may be maintained at a cooler temperature below the dewpoint of the hot gas mixture by the flowing cooled quench water 370 on outer surface 324 of outer annular tube 320. Because protruding portion 322 is cooled and maintained below the dewpoint of the hot gas mixture, aqueous condensation continuously occurs on inner surface 326 of outer annular tube 320. Titanium may maintain a passivating oxide film in the presence of liquid water, which protects the Titanium metal from corrosion from bromine and trace amounts of HBr acid. Tantalum or other refractory metal are resistant to corrosion attack by aqueous acids or bromine at temperatures below 150 C. Alternatively, Niobium, Molybdenum or Tungsten are similarly resistant to corrosion at the lower temperatures below 150 C.

The foregoing outlines features of several embodiments so that a person of ordinary skill in the art may better understand the aspects of the present disclosure. Such features may be replaced by any one of numerous equivalent alternatives, only some of which are disclosed herein. One of ordinary skill in the art should appreciate that they may readily use the present disclosure as a basis for designing or modifying other processes and structures for carrying out the same purposes and/or achieving the same advantages of the embodiments introduced herein. One of ordinary skill in the art should also realize that such equivalent constructions do not depart from the spirit and scope of the present disclosure, and that they may make various changes, substitutions and alterations herein without departing from the spirit and scope of the present disclosure.

The present invention is now described with reference to the following clauses:
1. A hydrogen bromide (HBr) oxidation/quench system comprising:
   a heat exchanger reactor;
   an adiabatic catalytic reactor in fluid communication with the heat exchanger reactor;
   a quench vessel, the quench vessel in fluid communication with the adiabatic catalytic rector, the quench vessel having a flange;
   a joined three phase separator and absorber column, wherein both the three phase separator and the absorber column are in fluid communication with the quench vessel; and
   an aqueous stripping column in fluid communication with the heat exchanger reactor and the absorber column.
2. The system of clause 1, further comprising a heat exchanger HEX-1 positioned upstream of the heat exchanger reactor, the heat exchanger HEX-1 in fluid communication with the heat exchanger reactor.
3. The system of clause 1 or clause 2, further comprising a reactor effluent cooler HEX-3 positioned between the heat exchanger reactor and the adiabatic catalytic reactor, a reactor effluent cooler HEX-3 process side composed of metallic Nickel or metallic nickel alloy.
4. The system of any one of clauses 1 to 3, further comprising waste heat recovery exchanger HEX-6 positioned between the adiabatic catalytic reactor and the quench vessel, the waste heat recovery exchanger HEX-6 composed of metallic Nickel or metallic nickel alloy on a process side.
5. The system of any one of clauses 1 to 4, wherein the quench vessel is glass-lined, epoxy-lined or fluoropolymer-lined.
6. The system of any one of clauses 1 to 5, wherein the flange of the quench system includes a hot vapor feed transition assembly.
7. The system of any one of clauses 1 to 6, further comprising quench recycle cooler HEX-4 positioned between the quench vessel and the three phase separator wherein quench recycle cooler HEX-4 includes tubes composed of ceramic or refractory metal or are refractory metal clad.
8. The system of any one of clauses 1 to 7, wherein the three phase separator includes a weir.
9. The system of any one of clauses 1 to 8, wherein a refrigerated liquid cooler HEX-5 is positioned between the aqueous stripping column and the absorber column, wherein refrigerated liquid cooler HEX-5 includes tubes composed of ceramic or refractory metal or are refractory metal clad.
10. A method comprising:
   reacting air and HBr in a heat exchanger reactor to form reactor effluent comprising HBr, water, bromine, nitrogen and unreacted oxygen;
   reacting the reactor effluent in an adiabatic reactor to form adiabatic reactor effluent comprising HBr, water, bromine, nitrogen and unreacted oxygen;
   quenching the adiabatic reactor effluent to form a quench bottoms outlet stream and a quench vessel overhead stream;
   separating the quench bottoms outlet into a bromine product stream and a water recycle stream;
   using a first portion of the water recycle stream as a quench water feed stream; and
   stripping a second portion of the water recycle stream in an aqueous stripper to form a water out stream.
11. The method of clause 10, wherein stripping the second portion of the water recycle stream produces an absorber column water feed stream.
12. The method of clause 11, wherein the absorber column water feed stream is cooled.
13. The method of any one of clauses 10 to 12, further comprising feeding an air stream to the aqueous stripping column.
14. The method of clause 13, further comprising compressing the air stream prior to feeding the air stream to the aqueous stripping column.
15. The method of any one of clauses 10 to 14, further comprising:
   forming an aqueous stripping column overhead stream comprising air and bromine; and
   combining the aqueous stripping column overhead stream with HBr prior to reacting the HBr with air in the heat exchange reactor.
16. A hot vapor transition assembly comprising:
   a central nickel alloy tube;
   an outer annular tube, the outer annular tube annularly enclosing the central nickel alloy tube and forming an inner annular space between the central nickel alloy tube and the outer annular tube; and
   a lining, the lining annularly enclosing the outer annular tube and forming an outer annular space between the outer annular tube and the lining.
17. The hot vapor transition assembly of clause 16, wherein the outer annular tube is composed of Titanium, Tantalum, Niobium, Molybdenum, or Tungsten.
18. The hot vapor transition assembly of clause 16 or clause 17, wherein the lining is comprised of glass, epoxy or fluoropolymer.
19. A method comprising:
   providing a quench vessel, the quench vessel comprising a nozzle;
   providing a hot vapor transition assembly, the hot vapor transition assembly positioned within the nozzle, the hot vapor transition assembly comprising:
      a central nickel alloy tube;
      an outer annular tube, the outer annular tube annularly enclosing the central nickel alloy tube and forming an inner annular space between the central nickel alloy tube and the outer annular tube, the outer annular tube having a protruding portion that extends into the quench vessel; and
      a lining, the lining annularly enclosing the outer annular tube and forming an outer annular space between the outer annular tube and the lining;
   introducing hot vapor into the central nickel tube, the hot vapor temperature exceeding the dew point of the hot vapor;
   purging the outer annual space with buffer air; and
   cooling the protruding portion with quench water.
20. The method of clause 19, wherein the nozzle includes an outer flange and an inner flange positioned proximate each other.
21. The method of clause 20, wherein the inner flange is lined with a fluoropolymer, glass or epoxy.
22. The method of any one of clauses 19 to 21, wherein a gasket is positioned between the outer flange and the inner flange, the gasket formed of fluoropolymer.
23. The method of any one of clauses 19 to 22, wherein the protruding portion is cooled to a temperature below the dewpoint temperature of the hot vapor.

## Claims

1. A hydrogen bromide (HBr) oxidation/quench system comprising:
a heat exchanger reactor;
an adiabatic catalytic reactor in fluid communication with the heat exchanger reactor;
a quench vessel, the quench vessel in fluid communication with the adiabatic catalytic rector, the quench vessel having a flange;
a joined three phase separator and absorber column, wherein both the three phase separator and the absorber column are in fluid communication with the quench vessel; and
an aqueous stripping column in fluid communication with the heat exchanger reactor and the absorber column.

2. The system of claim 1, further comprising a heat exchanger HEX-1 positioned upstream of the heat exchanger reactor, the heat exchanger HEX-1 in fluid communication with the heat exchanger reactor.

3. The system of claim 1 or claim 2, further comprising a reactor effluent cooler HEX-3 positioned between the heat exchanger reactor and the adiabatic catalytic reactor, a reactor effluent cooler HEX-3 process side composed of metallic Nickel or metallic nickel alloy.

4. The system of any one of claims 1 to 3, further comprising waste heat recovery exchanger HEX-6 positioned between the adiabatic catalytic reactor and the quench vessel, the waste heat recovery exchanger HEX-6 composed of metallic Nickel or metallic nickel alloy on a process side.

5. The system of any one of claims 1 to 4, wherein the quench vessel is glass-lined, epoxy-lined or fluoropolymer-lined.

6. The system of any one of claims 1 to 5, wherein the flange of the quench system includes a hot vapor feed transition assembly.

7. The system of any one of claims 1 to 6, further comprising quench recycle cooler HEX-4 positioned between the quench vessel and the three phase separator wherein quench recycle cooler HEX-4 includes tubes composed of ceramic or refractory metal or are refractory metal clad.

8. The system of any one of claims 1 to 7, wherein the three phase separator includes a weir.

9. The system of any one of claims 1 to 8, wherein a refrigerated liquid cooler HEX-5 is positioned between the aqueous stripping column and the absorber column, wherein refrigerated liquid cooler HEX-5 includes tubes composed of ceramic or refractory metal or are refractory metal clad.

10. A method comprising:
reacting air and HBr in a heat exchanger reactor to form reactor effluent comprising HBr, water, bromine, nitrogen and unreacted oxygen;
reacting the reactor effluent in an adiabatic reactor to form adiabatic reactor effluent comprising HBr, water, bromine, nitrogen and unreacted oxygen;
quenching the adiabatic reactor effluent to form a quench bottoms outlet stream and a quench vessel overhead stream;
separating the quench bottoms outlet into a bromine product stream and a water recycle stream;
using a first portion of the water recycle stream as a quench water feed stream; and
stripping a second portion of the water recycle stream in an aqueous stripper to form a water out stream.

11. The method of claim 10, wherein stripping the second portion of the water recycle stream produces an absorber column water feed stream; optionally, wherein the absorber column water feed stream is cooled.

12. The method of claim 10 or claim 11:
further comprising feeding an air stream to the aqueous stripping column; optionally, further comprising compressing the air stream prior to feeding the air stream to the aqueous stripping column; and/or,
further comprising:
forming an aqueous stripping column overhead stream comprising air and bromine; and
combining the aqueous stripping column overhead stream with HBr prior to reacting the HBr with air in the heat exchange reactor.

13. A hot vapor transition assembly comprising:
a central nickel alloy tube;
an outer annular tube, the outer annular tube annularly enclosing the central nickel alloy tube and forming an inner annular space between the central nickel alloy tube and the outer annular tube; and
a lining, the lining annularly enclosing the outer annular tube and forming an outer annular space between the outer annular tube and the lining.

14. The hot vapor transition assembly of claim 13, wherein:
the outer annular tube is composed of Titanium, Tantalum, Niobium, Molybdenum, or Tungsten; and/or,
the lining is comprised of glass, epoxy or fluoropolymer.

15. A method comprising:
providing a quench vessel, the quench vessel comprising a nozzle;
providing a hot vapor transition assembly, the hot vapor transition assembly positioned within the nozzle, the hot vapor transition assembly comprising:
a central nickel alloy tube;
an outer annular tube, the outer annular tube annularly enclosing the central nickel alloy tube and forming an inner annular space between the central nickel alloy tube and the outer annular tube, the outer annular tube having a protruding portion that extends into the quench vessel; and
a lining, the lining annularly enclosing the outer annular tube and forming an outer annular space between the outer annular tube and the lining;
introducing hot vapor into the central nickel tube, the hot vapor temperature exceeding the dew point of the hot vapor;
purging the outer annual space with buffer air; and
cooling the protruding portion with quench water.

16. The method of claim 15, wherein:
the nozzle includes an outer flange and an inner flange positioned proximate each other; optionally, wherein the inner flange is lined with a fluoropolymer, glass or epoxy; and/or,
wherein a gasket is positioned between the outer flange and the inner flange, the gasket formed of fluoropolymer; and/or,
wherein the protruding portion is cooled to a temperature below the dewpoint temperature of the hot vapor.
